# EUROPEAN PATENT APPLICATION

(11) **EP 1 898 124 A2**
(43) Date of publication of application: **12.03.2008**
(21) Application number: 07253550.3
(22) Date of filing: 07.09.2007
(51) Int. Cl.: F16H 48/14, F16H 48/22

(54) **Gearless differential in an integrated hydrostatic transmission**

(30) Priority: 07.09.2006 US 470851; 31.08.2007 US 849188
(71) Applicant: KANZAKI KOKYUKOKI MFG. CO., LTD., Hyogo 661-0981 (JP); Mizukawa, Katsumoto, Amagasaki-shi Hyogo 661-0981 (JP); Matsuura, Jun, Amagasaki-shi Hyogo 661-0981 (JP); Ishii, Norihiro, Amagasaki-shi Hyogo 661-0981 (JP); Shimizu, Hiroaki, Amagasaki-shi Hyogo 661-0981 (JP); Irikura, Koji, Amagasaki-shi Hyogo 661-0981 (JP)
(72) Inventor: Mizukawa, Katsumo, Hyogo 661-0981 (JP); Matsuura, Jun, Hyogo 661-0981 (JP); Ishii, Norihiro, Hyogo 661-0981 (JP); Shimizu, Hiroaki, Hyogo 661-0981 (JP); Irikura, Koji, Hyogo 661-0981 (JP)
(74) Representative: Carter, Stephen John

(57) **Abstract**

An improved differential unit (101) for an integrated hydrostatic transmission (IHT) is provided. The differential unit comprises an input gear (200), a cross-shaft (202) disposed within a central opening of the input gear, and a pair of clutch members (204L,204R) disposed coaxial with the input gear. One of each clutch member is disposed on opposite sides of the cross-shaft. A first plurality of friction members (208) extend from each clutch member. The differential unit also comprises a pair of side couplings (210L,210R), each coaxially disposed within one of the clutch members, and a second plurality of friction members (212) extending from each side coupling. Each clutch member includes a cam surface (206) that comes in contact with the cross-shaft when the differential unit is under normal operating conditions. Alternative embodiments are also described herein.

## Description

### BACKGROUND OF THE INVENTION

### Field of the Invention

The present invention relates to an axle driving apparatus. More specifically, the present invention relates to a gearless differential provided within an integrated hydrostatic transmission.

### Background Art

A hydrostatic transaxle apparatus called an integrated hydrostatic transmission (IHT) comprises a hydrostatic transmission (including a hydraulic pump and hydraulic motor; the combination hereinafter referred to as an "HST"), an axle, and a drive train interposed between the HST and the axle, all disposed together in a common housing. Many drive trains include a differential unit which permits independent or differential rotation of the drive wheels when the vehicle turns. Certain conditions, however, require the differential unit to be "locked" in order to transmit adequate torque to the axle. Various locking differentials have been proposed in, for example, U.S. Patent Nos. 2,555,044, 5,413,015, 5,590,572, 5,727,430, 5,715,733, and 6,688,194, all of which are hereby incorporated by reference in their entirety.

### BRIEF SUMMARY OF THE INVENTION

Presented herein is an improved differential unit for an integrated hydrostatic transmission (IHT). In accordance with one aspect of the present invention, there is provided an axle driving apparatus comprising a housing, an HST contained within the housing, a gearless differential unit contained within the housing and drivingly connected to the output shaft of the HST, and a pair of axle shafts driven by the differential unit. The housing includes oil for the input gear to soak. The gearless differential unit comprises an input gear having a central opening, a cross-shaft disposed within the central opening of the input gear, and a pair of clutch members disposed coaxial with the input gear. One of each clutch member is disposed on opposite sides of the cross-shaft. A first plurality of friction members extends from each clutch member. The differential unit further comprises a pair of side couplings, each coaxially disposed within one of the clutch members. A second plurality of friction members extends from each side coupling. At least one of the second plurality of friction members is disposed proximate one of the first plurality of friction members for selective engagement therewith. In addition, each clutch member includes a cam surface that comes in contact with the cross-shaft when the differential unit is under normal operating conditions.

In one embodiment, the axle driving apparatus further includes a differential housing encasing the input gear, clutch members, and side couplings. In alternative embodiments, the cross-shaft has varying cross-sectional configurations to provide adequate contact between the cross-shaft and the cam surface. The housing includes oil for the input gear to soak. Further, in other alternative embodiments, oil channels and/or oil bores are created on the surfaces of the input gear and/or differential housing to facilitate the circulation of oil through the differential unit. In addition, in one embodiment, one clutch member includes at least one receiving slot, and the other clutch member includes at least one locking means extending therefrom. The locking means is aligned with the receiving slot in the other clutch member so as to form a loose interlock between the clutch members. In an additional embodiment, a spring is disposed within a receiving slot to bias the two clutch members apart.

In accordance with another aspect of the present invention, there is provided a differential unit for driving a pair of axle shaft segments. The differential unit is comprised of an input gear and a pair of clutch members disposed coaxial with the input gear and on opposite sides of the input gear. The input gear has a central opening, and a protrusion extending from each side surface of the input gear. Each clutch member has a cam surface aligned proximate with the protrusion extending from the respective side surface of the input gear for selective engagement. The clutch members are also loosely interlock with each other through the central opening of the input gear. The differential unit further comprises a first plurality of friction members extending from each clutch member, a pair of side couplings, each coaxially disposed within one of the clutch members, and a second plurality of friction members extending from each side coupling. At least one of the second plurality of friction members is disposed proximate one of the first plurality of friction members for selective engagement.

In accordance with yet another aspect of the present invention, there is provided an alternative differential unit for driving a pair of axle shaft segments. Such differential unit is comprised of an input gear and a pair of clutch members disposed coaxial with the input gear and on opposite sides of the input gear. The input gear of the alternative differential unit, however, has a central opening and a cam surface on each side surface of the input gear. Each clutch member has a protrusion extending from a surface of the clutch member. The protrusion on each clutch member is aligned with the cam surface on the respective side surface of the input gear for selective engagement therewith. The clutch members are loosely interlocked with each other through the central opening of the input gear. The differential unit further comprises a first plurality of friction members extending from each clutch member, a pair of side couplings, each coaxially disposed within one of the clutch members, and a second plurality of friction members extending from each side coupling. At least one of the second plurality of friction members is disposed proximate one of the first plurality of friction members for selective engagement.

### BRIEF DESCRIPTION OF THE DRAWINGS/FIGURES

The accompanying figures, which are incorporated herein and form part of the specification, illustrate an axle driving apparatus. Together with the description, the figures further serve to explain the principles of the axle driving apparatus described herein and thereby enable a person skilled in the pertinent art to make and use the axle driving apparatus.

FIG. 1 is a cross-sectional view of an integrated hydrostatic transmission (IHT) employing a differential unit in accordance with one embodiment of the present invention.

FIG. 2 is a cross-sectional view of the differential unit of FIG. 1.

FIGs. 3A and 3B are a side view and a perspective view, respectively, of the input gear of the differential unit of FIG. 2.

FIGs. 4A and 4B are a side view and a perspective view, respectively, of a clutch member of FIG. 2.

FIGs. 5A and 5B are a side view and a perspective view, respectively, of an alternative clutch member.

FIG. 6 is a partial cross-sectional view of a differential unit employing the clutch members of FIG. 5.

FIGs. 7A-D show alternative cross-shafts for use in the differential unit of the present invention.

FIGs. 8A and 8B are a side view and a perspective view, respectively, of an alternative clutch member.

FIG. 9 is a side view, partially in cross-section, of a differential unit employing the cross-shaft of FIG. 7D.

FIG. 10 is a cross-sectional view of a differential unit employing the cross-shaft of FIG. 7D.

FIGs. 11A-C are enlarged views of the contact surface between a cam surface of a clutch member and a cross-shaft of the present invention.

FIG. 12 is a longitudinal sectional view of a differential unit employing the cross-shaft of FIG. 7B.

FIGs. 13A-D are side views and a perspective views, respectively, of alternative input gears.

FIGs. 14A and 14B are a side view and a perspective view, respectively, of an alternative clutch member.

FIGs. 15A-D are side views and a perspective views, respectively, of alternative clutch members.

FIGs. 16A and 16B are a side view and a perspective view, respectively, of an alternative clutch member.

FIGs. 17A and 17B are a side view and a perspective view, respectively, of an alternative input gear.

FIGs. 18A and 18B are a side view and a perspective view, respectively, of an alternative clutch member.

FIGs. 19A and 19B are a side view and a perspective view, respectively, of an alternative clutch member.

FIGs. 20A and 20B are a side view and a perspective view, respectively, of a differential housing.

FIG. 21A is a cross-sectional view of lubrication oil in the differential apparatus. FIG. 21B is a cross-sectional view taken along line A-A of FIG. 21A.

FIG. 22 is a side view and a perspective view of a housing having ditches for draining oil.

FIG. 23 is a four-wheel-drive vehicle employing a differential unit as presented herein.

FIG. 24 is a two-wheel-drive vehicle employing a differential unit as presented herein.

FIG. 25 is a cross-sectional view of an IHT employing an alternative differential unit.

FIG. 26 is a cross-sectional view of the IHT of FIG. 25.

FIG. 27 is a cross-sectional view of the differential unit of FIG. 25.

FIG. 28 is an exploded view of the differential unit of FIG. 25.

FIG. 29 is a cross-sectional view of an IHT incorporating an alternative differential unit.

FIG. 30 is a cross-sectional view of the differential unit of FIG. 29.

FIG. 31 is an exploded view of the differential unit of FIG. 29.

FIG. 32 is a diagrammatic plan view of a four-wheel vehicle provided with a steering linkage and four steerable wheels, in accordance with an embodiment of the present invention.

FIG. 33 is a cross-sectional view of a portion of a rear transaxle of the vehicle of FIG. 32.

FIG. 34 is a cross-sectional view of a portion of an alternative differential unit.

FIG. 35 is an enlarged view of a portion of a friction member of the differential unit of FIG. 34.

### DETAILED DESCRIPTION OF THE INVENTION

Preferred embodiments of an axle driving apparatus are described below with reference to the figures where like reference numbers indicate identical or functionally similar elements. Also in the figures, the left most digit of each reference number corresponds to the figure in which the reference number is first used. While specific configurations and arrangements are discussed, it should be understood that this is done for illustrative purposes only. A person skilled in the relevant art will recognize that other configurations and arrangements can be used without departing from the spirit and scope of the appended claims.

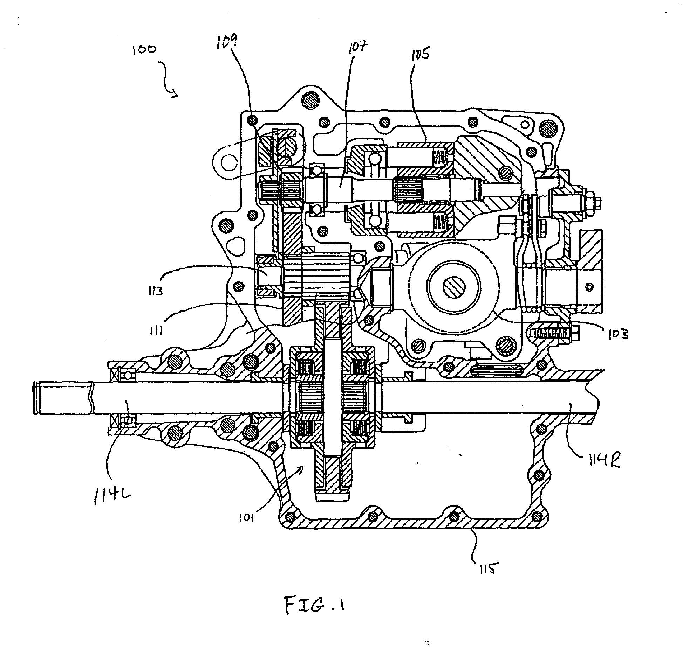

FIG. 1 depicts an integrated hydrostatic transmission (IHT) 100 employing a differential unit 101 in accordance with one embodiment of the present invention. IHT 100 includes a hydraulic pump 103 (shown in phantom) and a hydraulic motor 105 fluidly connected to the hydraulic pump 103. A similar construction is shown in U.S. Patent No. 6,007,449, which is hereby incorporated by reference in its entirety. Hydraulic motor 105 includes an output shaft, or motor shaft 107. Splined gear 109 is mounted on motor shaft 107, to thereby rotate with motor shaft 107. Splined gear 109 meshes with gear 111 mounted on countershaft 113. Rotation of countershaft 113 thereby transmits rotational drive to differential unit 101. Differential unit 101 thereafter differentially drives axle shafts 114L and 114R. The components of IHT 100 are all appropriately mounted and maintained within IHT housing 115. Housing 115 includes oil for an input gear to soak.

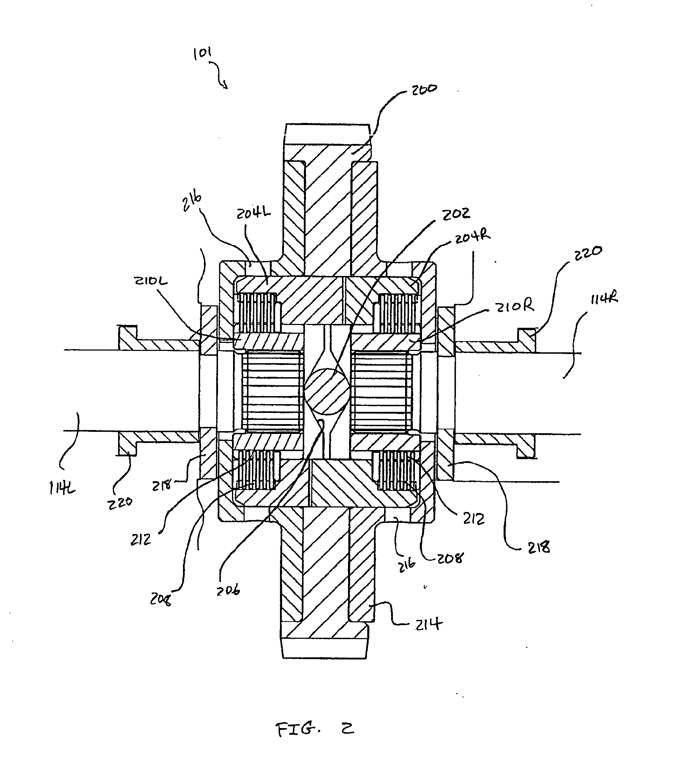

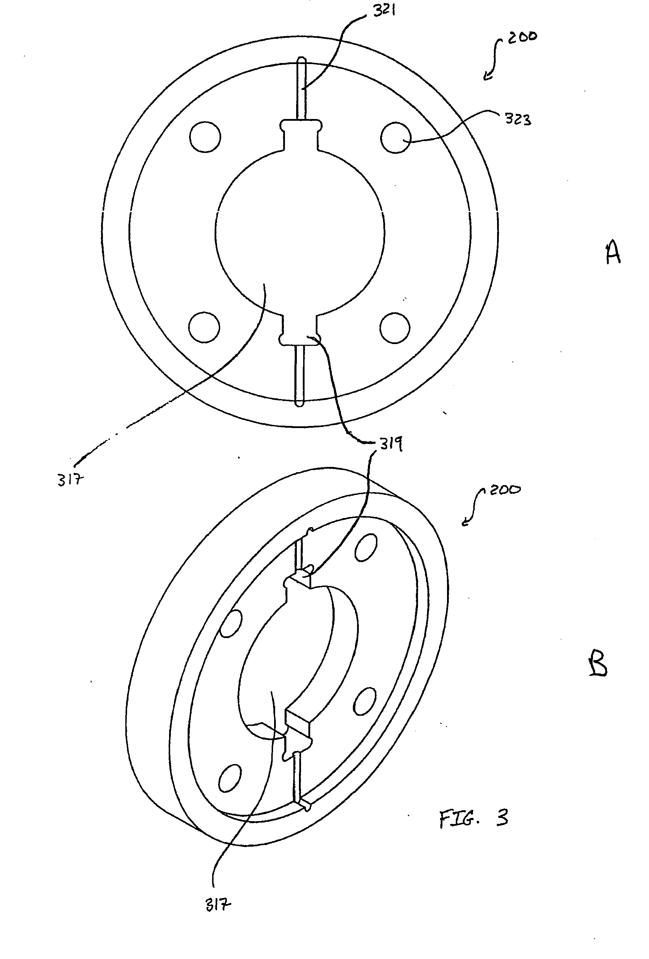

FIG. 2 is a cross-sectional view of differential unit 101 of FIG. 1. Differential unit 101 includes an input gear 200 having a central opening (as shown in FIG. 3). A cross-shaft 202 is disposed within the central opening of the input gear 200 and is interlocked with the input gear such that rotation of the input gear rotates the cross-shaft. A pair of clutch members 204L, 204R are disposed coaxial with input gear 200. Clutch members 204L, 204R are disposed on opposite sides of cross-shaft 202.

Each clutch member 204L, 204R includes a cam surface 206 which comes in contact with the cross-shaft 202 when the differential unit 101 is traveling forward under normal operating conditions. Each clutch member 204L, 204R also includes a first plurality of friction members 208 extending from therefrom.

Differential unit 101 also includes a pair of side couplings 210L, 210R. Each side coupling 210L, 210R is coaxially disposed within one of the clutch members 204L, 204R. A second plurality of friction members 212 extend from each side coupling 210L, 210R. The first and second plurality of friction members 208, 212 are disposed proximate one another for selective engagement therewith. Side couplings 210L, 210R are also internally splined to mesh with the splined ends of axle shafts 114L, 114R.

In operation, rotation of input gear 200 results in rotation of cross-shaft 202. As cross-shaft 202 moves forward (or backward) within the space provided between cam surfaces 206 of clutch members 204L, 204R, cross-shaft 202 contacts cam surfaces 206 and biases clutch members 204L, 204R apart. The outward biasing of clutch members 204L, 204R results in frictional engagement of the first and second plurality of friction members 208, 212. Such frictional engagement thereafter rotates side couplings 210L, 210R, which results in the rotation of axle shafts 114L, 114R. When one axle shaft (114L or 114R) rotates faster than the input gear, as happens when a vehicle is turning, the respective clutch member (204L or 204R) rotates faster than the cross-shaft 202, disengages with the cross-shaft 202, is maintained in a disengaged condition by a locking means (described below), and thereafter disengages the respective axle shaft 114L or 114R from differential unit 101. For example, when a vehicle is making a right turn, a wheel mounted on axle 114L is opposite to the turning center, and rotates faster than a wheel mounted on axle 114R. In this instance, axle 114L will disengage from differential unit 101, such that substantially no driving force is transmitted to axle 114L.

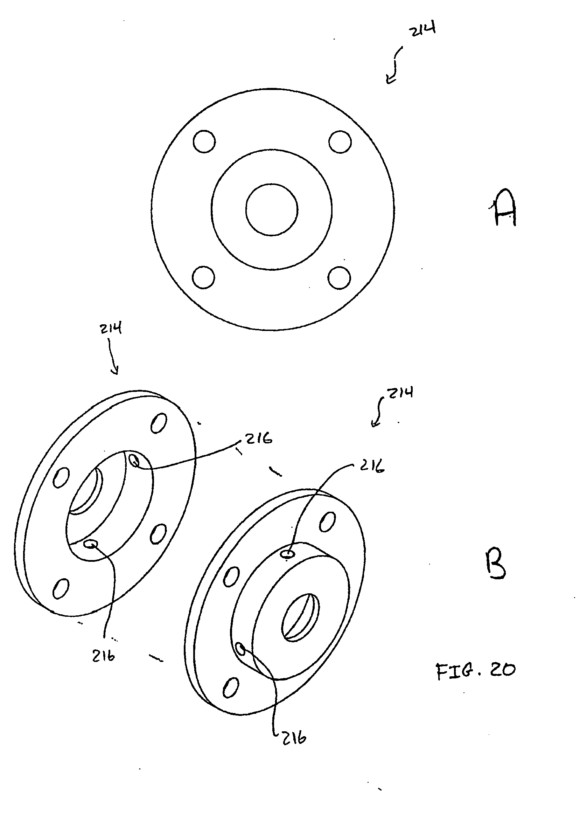

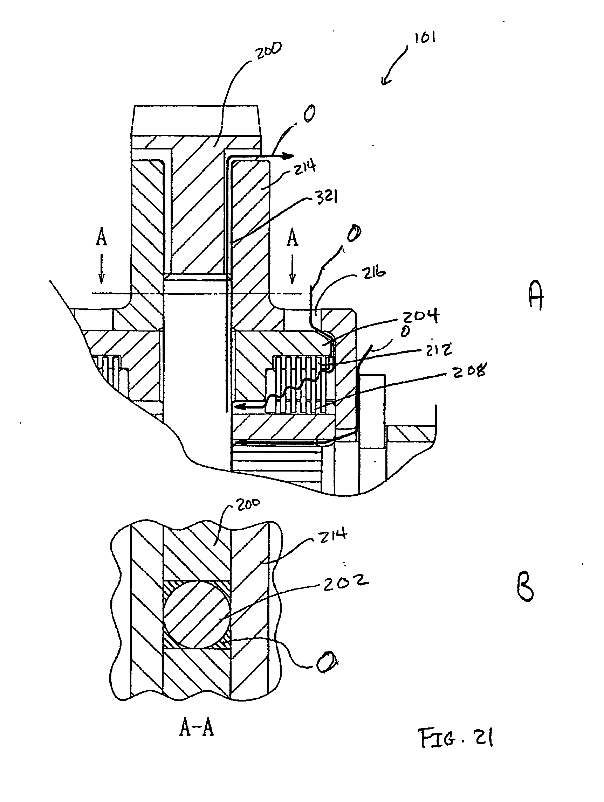

A differential housing 214 encases the input gear 200, clutch members 204L, 204R, and side couplings 210L, 210R. Differential housing 214 is maintained within IHT housing 115 and on the axle shafts 114L, 114R supported by washers 218 and bushes 220, respectively. As such, differential housing 214 thereby serves to align the components of the differential unit 101. Differential housing 214 also includes oil bores 216 to facilitate the circulation of oil through the differential unit 101. FIGs. 20A and 20B are a side view and a perspective view, respectively, of differential housing 214. FIG. 21A depicts the flow of lubrication oil in differential unit 101. As shown by the arrows, lubrication oil O is drained by centrifugal force through oil channels 321 and is then sucked through oil bores 216. As such, lubricating oil is circulated through differential unit 101, and more specifically through friction members 208, 212.

FIGs. 3A and 3B are a side view and a perspective view, respectively, of the input gear 200 of the differential unit 101 of FIG. 2. Input gear 200 has a central opening 317 for receiving cross-shaft 202 and clutch members 204L, 204R. Central opening 317 includes receiving grooves 319 for receiving the ends of cross-shaft 202. As such, cross-shaft 202 is interlocked with input gear 200 such that rotation of input gear 200 rotates cross-shaft 202. Input gear 200 further includes oil channels 321 to facilitate the circulation of oil through the differential unit 101. Bores 323 are used to bolt the sides of differential housing 214 to input gear 200.

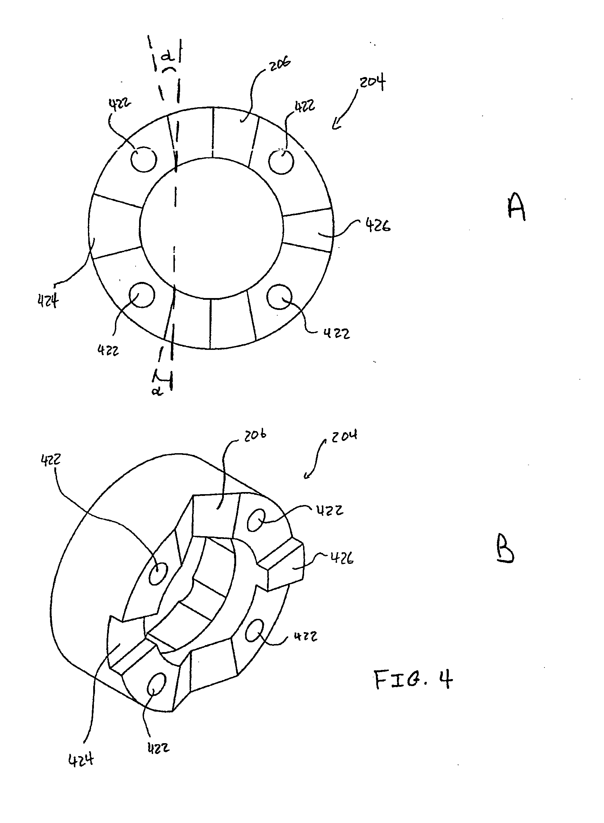

FIGs. 4A and 4B are a side view and a perspective view, respectively, of clutch member 204 of FIG. 2. Clutch member 204 includes angled cam surface 206. Specifically, the side walls of cam surface 206 are set at an angle α for complete contact with cross-shaft 202 when the cross-shaft is moved forward within the space provided between the two cam surfaces 206 on clutch members 204L, 204R. In a preferred embodiment, one clutch member (204L or 204R) includes at least one receiving slot, and the opposite clutch member (204R or 204L) includes a locking means extending therefrom. For example, as shown in FIG. 4, clutch member 204 has a receiving slot in the form of a receiving wedge 424. Clutch member 204 also includes a locking means in the form of locking wedge 426. In operation, the locking means of one clutch member is aligned with the receiving slot in the other clutch member so as to form a loose interlock between the clutch members. For example, the locking wedge 426 of clutch member 204L is aligned with and disposed within the receiving wedge 424 of clutch member 204R, and vice-versa, so as to form a loose interlock between clutch members 204L and 204R. At least one of receiving bores 422 is used to house a biasing spring, which functions to bias the two clutch members 204R, 204L apart.

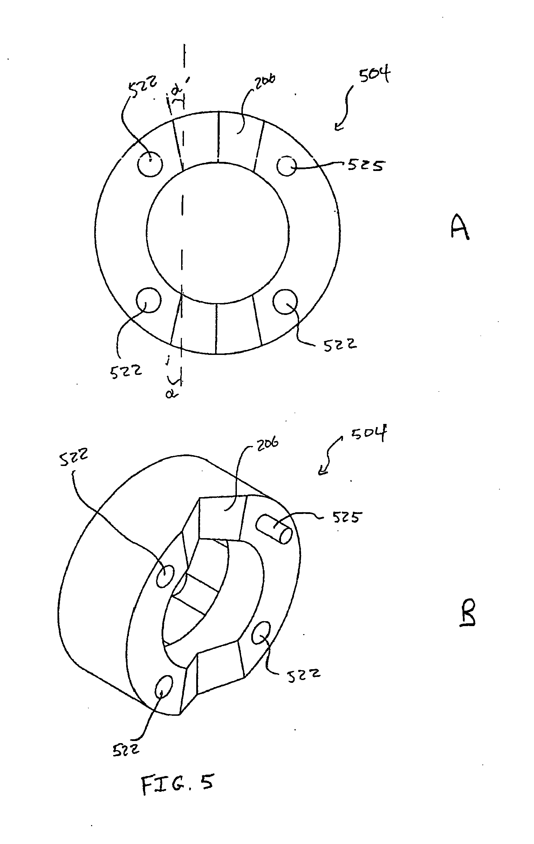

FIGs. 5A and 5B are a side view and a perspective view, respectively, of an alternative clutch member 504. Clutch member 504 includes angled cam surface 206. Specifically, the side walls of cam surface 206 are set at an angle α for complete contact with cross-shaft 202 when the cross-shaft is moved forward within the space provided between the two cam surfaces 206 on clutch members 504L, 504R. Clutch member 504 also includes a plurality of receiving slots in the form of receiving bores 522. Clutch member 504 differs from clutch member 204 in that the locking means of clutch member 504 takes the form of a locking pin 525 that extends from clutch member 504. In operation, the locking pin 525 of clutch member 504L is aligned with and disposed within a receiving bore 522 in clutch member 504R, and vice-versa, so as to form a loose interlock between clutch members 504L and 504R. At least one of the other receiving bores 522 is used to house a biasing spring, which functions to bias the two clutch members 504R, 504L apart.

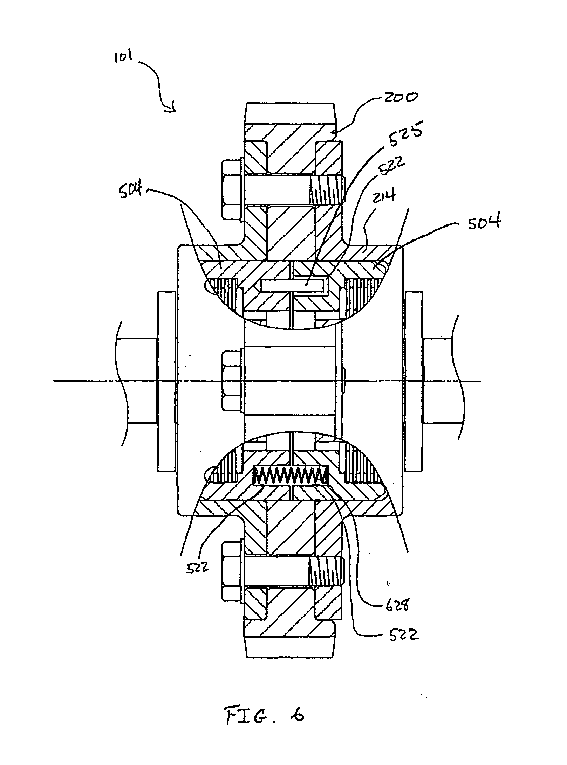

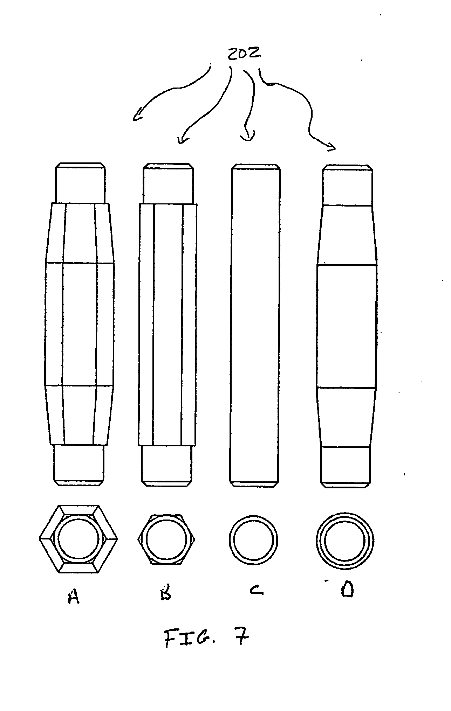

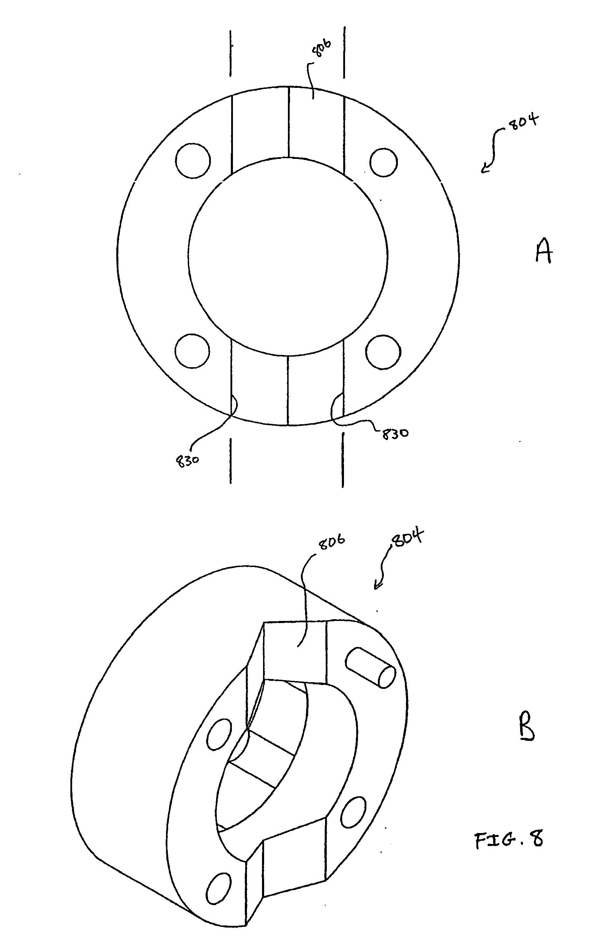

FIG. 6 is a partial cross-sectional view of a differential unit 101 employing the clutch members 504L, 504R of FIG. 5. As shown in FIG. 6, in one embodiment, a biasing spring 628 is disposed within opposing receiving bores 522 to bias the clutch members 504L, 504R apart.

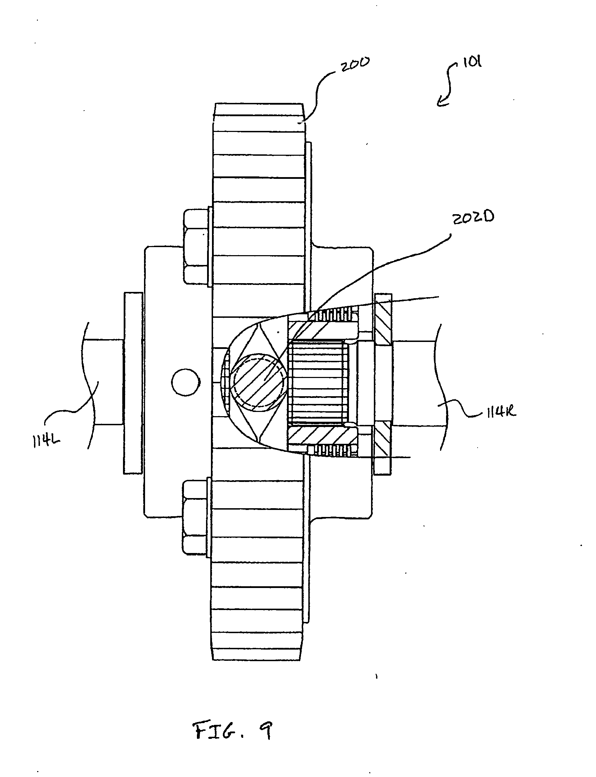

FIGs. 7A-D show alternative cross-shafts 202A, 202B, 202C, and 202D for use in differential unit 101. As is evident by FIG. 7, the cross-shaft may take on various cross-sectional shapes. For example, a simple circular cross-section (as in FIG.7C) may be employed. However, to optimize contact between cross-shaft 202 and cam surface 206, the cross-section may be modified to a polygonal cross-section, as shown in FIGs.7A and 7B, or a tapered cross-section as shown in FIGs. 7A and 7D. As shown in FIG. 7D, a portion of cross-shaft 202D has a circular cross-section having a first diameter and another portion of cross-shaft 202D has a circular cross-section with a smaller diameter than the first diameter.

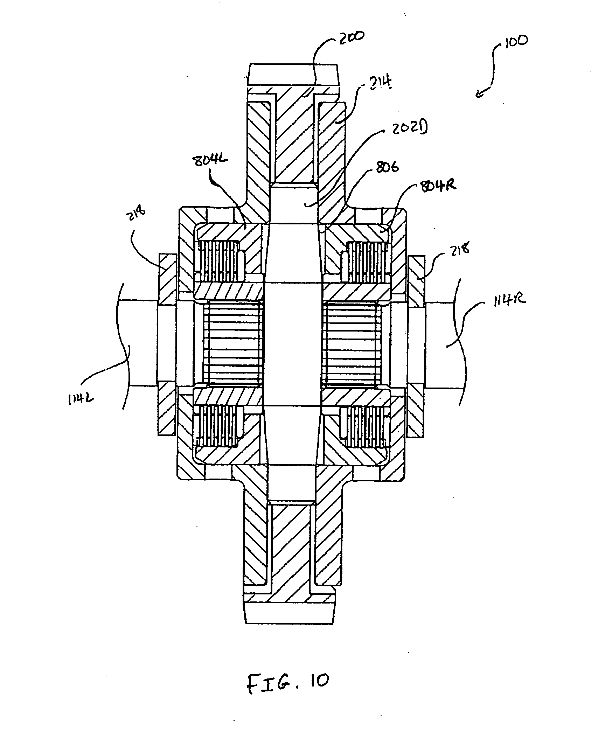

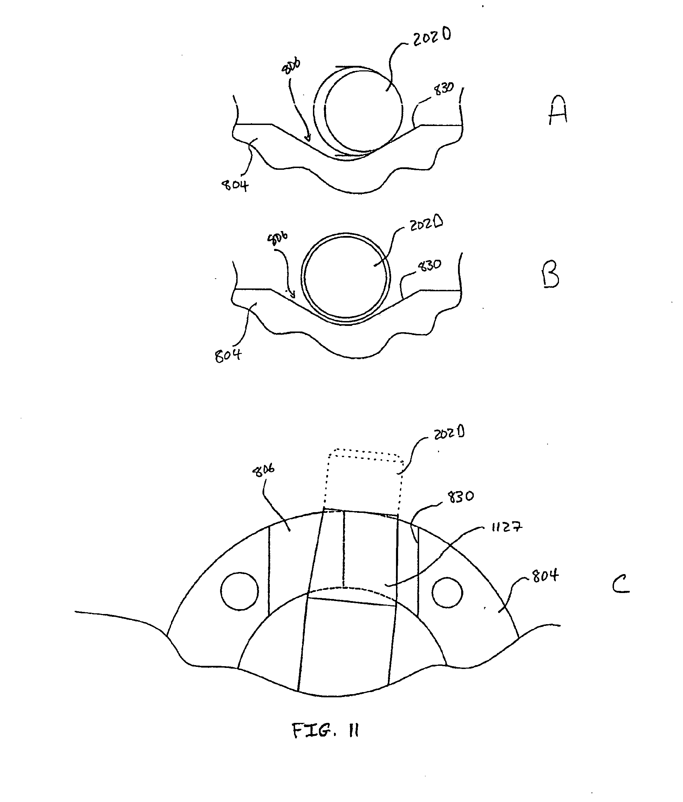

FIGs. 8A and 8B are a side view and a perspective view, respectively, of an alternative clutch member 804. Clutch member 804 is similar to clutch member 504 of FIG. 5, but differs in that the side walls 830 of cam surface 806 are aligned in parallel instead of angled. As such, clutch member 804 is more suitable for use with cross-shafts 202A and 202D of FIG. 7A and FIG. 7D.

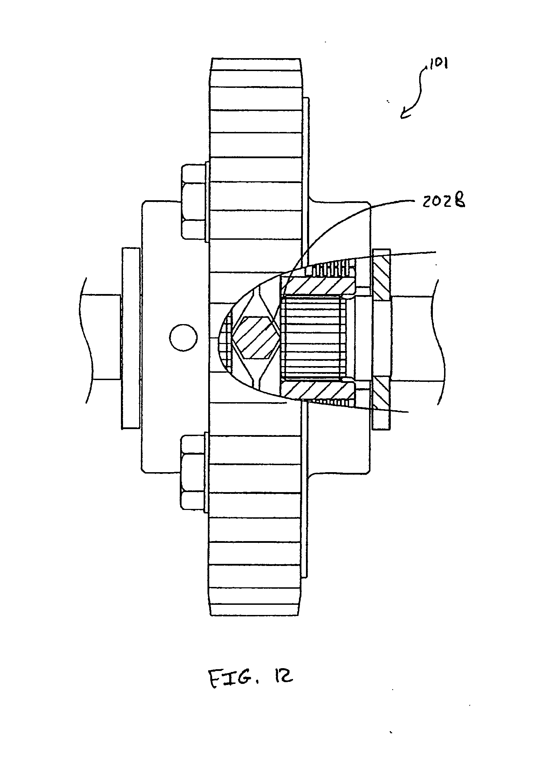

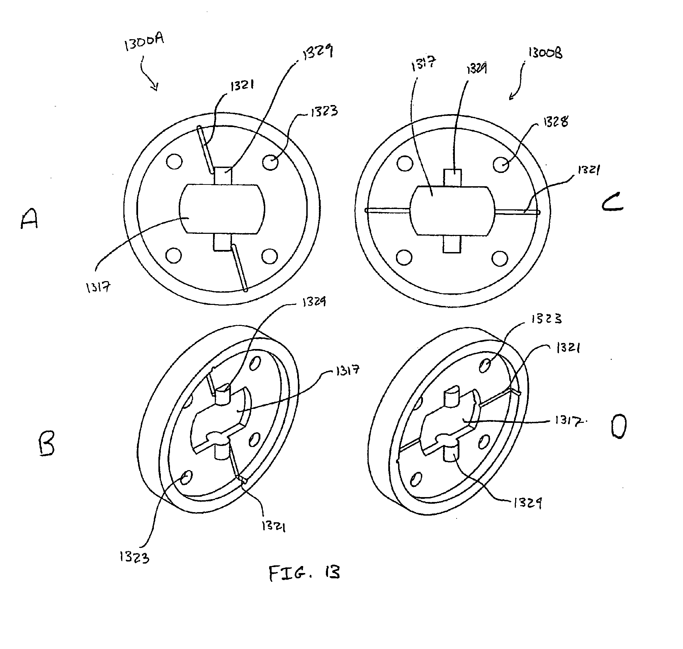

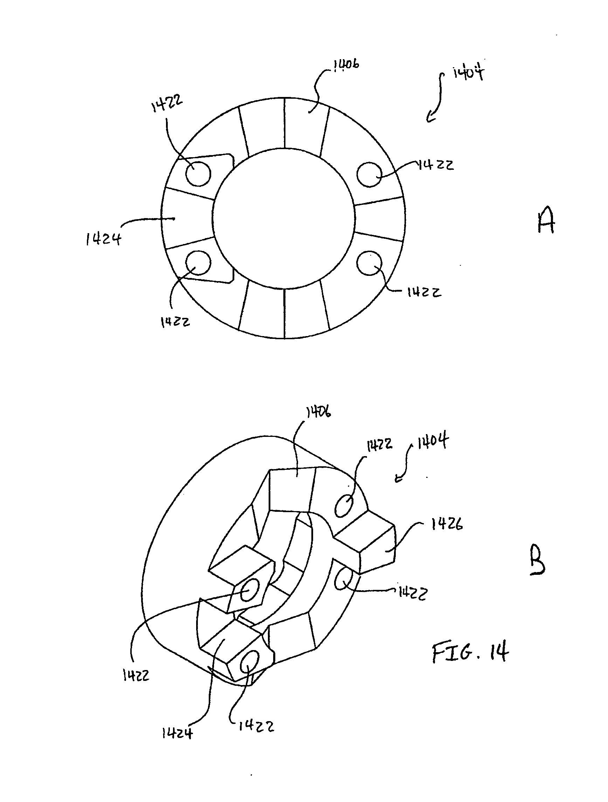

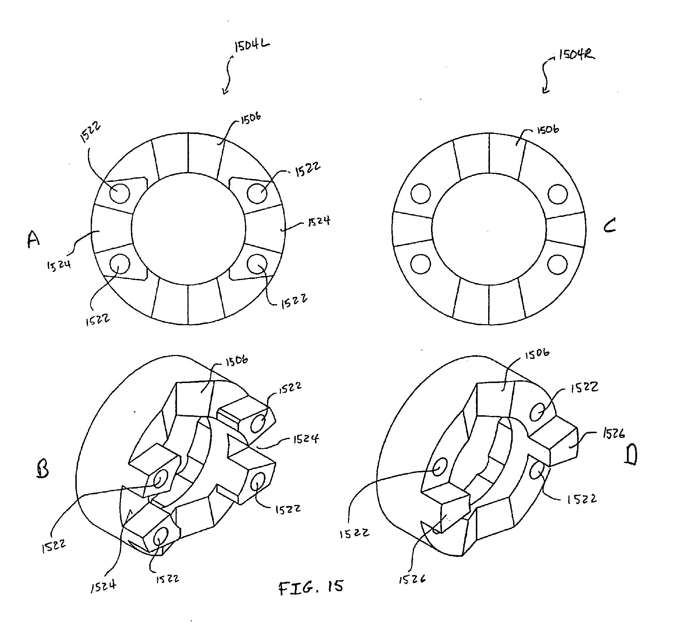

FIG. 9 is a side view, partially in cross-section, of differential unit 101 employing the cross-shaft 202D of FIG. 7D. FIG. 10 is a cross-sectional view of differential unit 101 employing the cross-shaft 202D which provides a modified contact surface between cross-shaft 202D and cam surface 806 of clutch members 804L, 804R. Such a modified contact surface may be employed for purposes of increasing the durability of the differential unit and/or simplicity of manufacture. For example, FIGs. 11A-C are enlarged views of the contact surface between cam surface 806 of clutch member 804 and cross-shaft 202D. FIG. 11B shows cross-shaft 202D in a neutral position. When input gear 200 is rotated, thus rotating cross-shaft 202D, the cross-shaft comes in contact with the side walls 830 of cam surface 806 of clutch member 804. As shown in FIG. 11C, the tapered portion 1127 of cross-shaft 202D moves toward complete and flush contact with side wall 830 of cam surface 806. As such, the side walls 830 of cam surface 806 can be machined in parallel alignment, and yet the contact surface between the clutch member and the cross-shaft can be designed to be flush. Such a design adds to the overall ease of manufacturing differential unit 101.

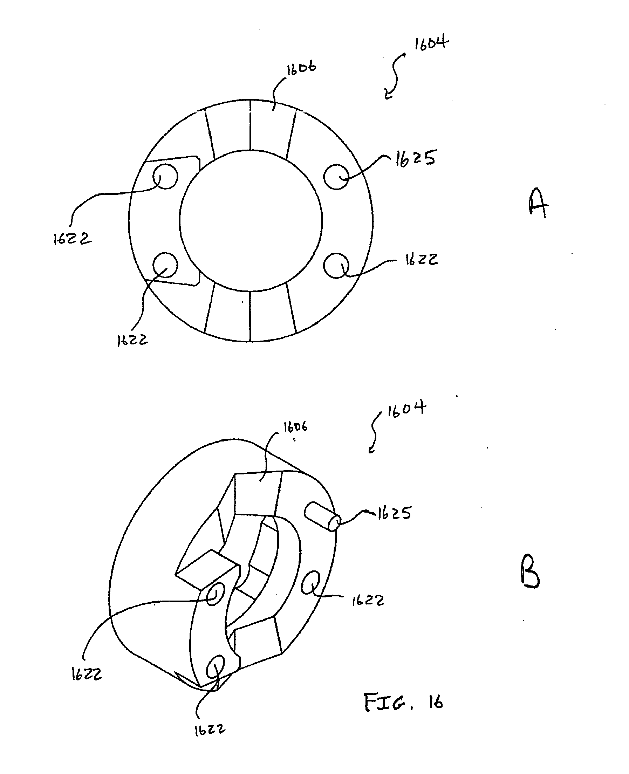

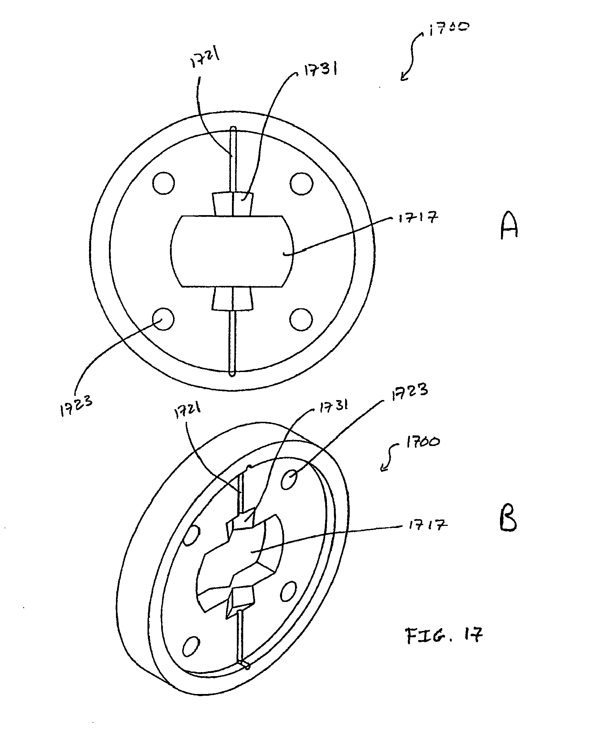

FIG. 12 is a longitudinal sectional view of differential unit 101 employing the cross-shaft 202B of FIG. 7B. As discussed above, and shown in FIG. 12, alternative cross-shafts may be employed to create a modified contact surface between the cross-shaft and the cam surface of the clutch members. Such a modified contact surface may be employed for purposes of increasing the durability of the differential unit and/or simplicity of manufacture.

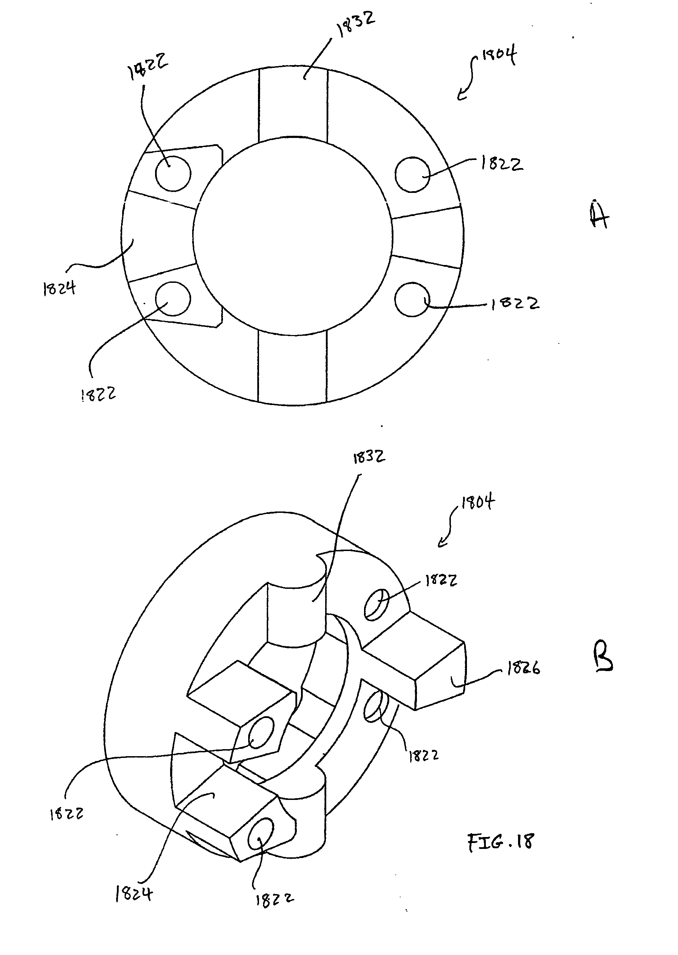

FIGs. 13A-D are side views and a perspective views, respectively, of alternative input gears 1300A, 1300B. Input gear 1300A includes a central opening 1317 for receiving the clutch members therein. Input gear 1300A, however, differs from input gear 200 in that input gear 1300A includes lateral protrusions 1329 which extend from the side surfaces of the input gear. As such, the need for a cross-shaft is negated because the protrusions 1329 align with the cam surfaces of the clutch members to serve the same function as the cross-shaft. The design of input gear 1300A adds flexibility to the design of the differential unit. Input gear 1300A also includes oil channels 1321 to facilitate the circulation of oil through the differential unit. Input gear 1300B differs from input gear 1300A only in the orientation of the oil channels 1321. Bores 1323 are used to bolt a differential housing to the input gear.

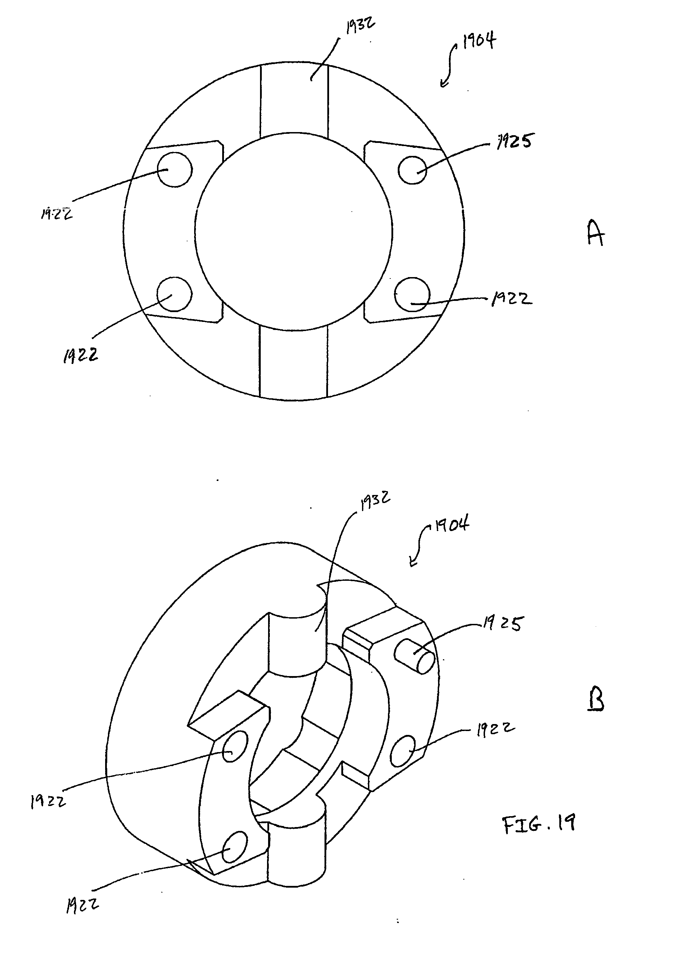

FIGs. 14A and 14B are a side view and a perspective view, respectively, of an alternative clutch member 1404. Clutch member 1404 includes angled cam surface 1406. In a preferred embodiment, one clutch member (1404L or 1404R) includes at least one receiving slot, and the opposite clutch member (1404R or 1404L) includes a locking means extending therefrom. For example, as shown in FIG. 14, clutch member 1404 has a plurality of receiving slots in the form of receiving bores 1422 and receiving wedge 1424. Clutch member 1404 also includes a locking means in the form of locking wedge 1426. In operation, the locking wedge 1426 of one clutch member is aligned with the receiving wedge 1424 in the other clutch member so as to form a loose interlock between the clutch members. For example, the locking wedge 1426 of clutch member 1404L is aligned with and disposed within the receiving wedge 1424 of clutch member 1404R, and vice-versa, so as to form a loose interlock between clutch members 1404L and 1404R. At least one of receiving bores 1422 is used to house a biasing spring, which functions to bias the two clutch members 1404R, 1404L apart.

FIGs. 15A-D are side views and perspective views, respectively, of alternative clutch members 1504R, 1504L. Each clutch member 1504R, 1504L includes an angled cam surface 1506. In a preferred embodiment, one clutch member (1504L or 1504R) includes at least one receiving slot, and the opposite clutch member (1504R or 1504L) includes a locking means extending therefrom. For example, as shown in FIG. 15, clutch member 1504L has a plurality of receiving slots in the form of receiving bores 1522 and receiving wedge 1524. Clutch member 1504R includes a plurality of receiving slots in the form of receiving bores 1522 and a locking means in the form of locking wedge 1526. In operation, the locking wedge 1526 of one clutch member is aligned with the receiving wedge 1524 in the other clutch member so as to form a loose interlock between the clutch members. For example, the locking wedge 1526 of clutch member 1504R is aligned with and disposed within the receiving wedge 1524 of clutch member 1504L, or vice-versa, so as to form a loose interlock between clutch members 1504L and 1504R. At least one of receiving bores 1522 is used to house a biasing spring, which functions to bias the two clutch members 1504R, 1504L apart.

FIGs. 16A and 16B are a side view and a perspective view, respectively, of an alternative clutch member 1604. Clutch member 1604 includes an angled cam surface 1606. In a preferred embodiment, one clutch member (1604L or 1604R) includes at least one receiving slot, and the opposite clutch member (1604R or 1604L) includes a locking means extending therefrom. For example, as shown in FIG. 16, clutch member 1604 has a plurality of receiving slots in the form of receiving bores 1622. Clutch member 1604 also includes a locking means in the form of locking pin 1625 that extends from clutch member 1604. In operation, the locking pin 1625 of clutch member 1604L is aligned with and disposed within a receiving bore 1622 in clutch member 1604R, and vice-versa, so as to form a loose interlock between clutch members 1604L and 1604R. At least one of receiving bores 1622 is used to house a biasing spring, which functions to bias the two clutch members 1604R, 1604L apart.

FIGs. 17A and 17B are a side view and a perspective view, respectively, of an alternative input gear 1700. Input gear 1700 includes a central opening 1717 for receiving the clutch members therein. Input gear 1700, however, differs from input gear 200 in that input gear 1700 includes lateral cam surfaces 1731 on each side surface of the input gear. As such, with the use of modified clutch members, the need for a cross-shaft is negated because the cam surfaces 1731 align with protrusions extending from modified clutch members to serve the same function as the cross-shaft. The design of input gear 1700 adds flexibility to the design of the differential unit. Input gear 1700 also includes oil channels 1721 to facilitate the circulation of oil through the differential unit. Bores 1723 are used to bolt a differential housing to the input gear.

FIGs. 18A and 18B are a side view and a perspective view, respectively, of an alternative clutch member 1804. Clutch member 1804 is similar to clutch member 1404 of FIG. 14. However, clutch member 1804 differs from clutch member 1404 in that clutch member 1404 includes an angled cam surface 1406, while clutch member 1804 includes a protrusion 1832 extending thereform. As such, clutch member 1804 may be used with input gear 1700. In operation, protrusions 1832 align with lateral cam surfaces 1731 of input gear 1700 to serve the function of cross-shaft 202. Further, as shown in FIG. 18, clutch member 1804 has a plurality of receiving slots in the form of receiving bores 1822 and receiving wedge 1824. Clutch member 1804 also includes a locking means in the form of locking wedge 1826. In operation, the locking wedge 1826 of one clutch member is aligned with the receiving wedge 1824 in the other clutch member so as to form a loose interlock between the clutch members. For example, the locking wedge 1826 of clutch member 1804L is aligned with and disposed within the receiving wedge 1824 of clutch member 1804R, and vice-versa, so as to form a loose interlock between clutch members 1804L and 1804R. At least one of receiving bores 1822 is used to house a biasing spring, which functions to bias the two clutch members 1804R, 1804L apart.

FIGs. 19A and 19B are a side view and a perspective view, respectively, of an alternative clutch member 1904. Clutch member 1904 is similar to clutch member 1604 of FIG. 16. However, clutch member 1904 differs from clutch member 1604 in that clutch member 1604 includes an angled cam surface 1606, while clutch member 1904 includes a protrusion 1932 extending thereform. As such, clutch member 1904 may be used with input gear 1700. In operation, protrusions 1932 align with the lateral cam surfaces 1731 of input gear 1700 to serve the function of cross-shaft 202. Further, as shown in FIG. 19, clutch member 1904 has a plurality of receiving slots in the form of receiving bores 1922. Clutch member 1904 also includes a locking means in the form of locking pin 1925 that extends from clutch member 1904. In operation, the locking pin 1925 of clutch member 1904L is aligned with and disposed within a receiving bore 1922 in clutch member 1904R, and vice-versa, so as to form a loose interlock between clutch members 1904L and 1904R. At least one of receiving bores 1922 is used to house a biasing spring, which functions to bias the two clutch members 1904R, 1904L apart.

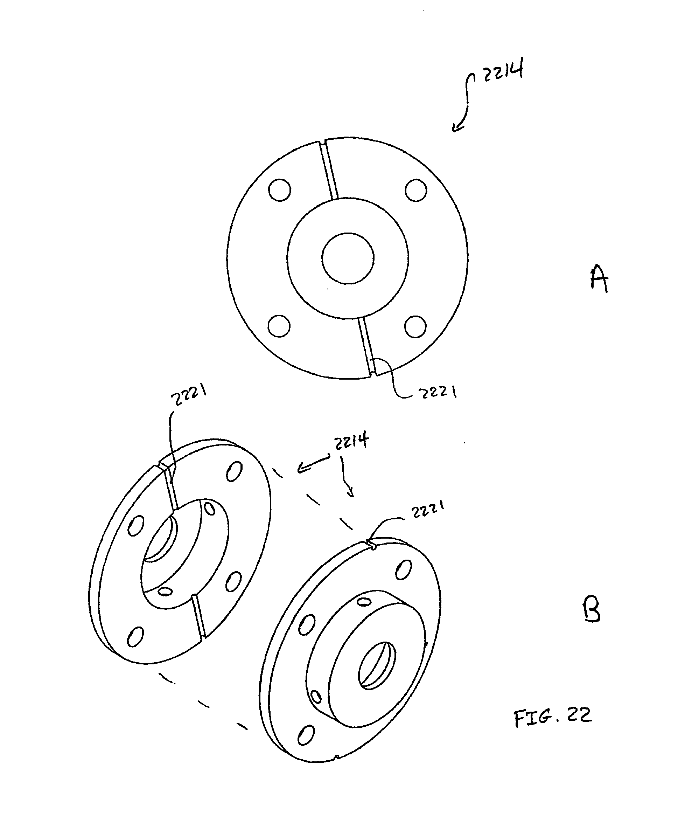

FIGs. 22A and 22B are a side view and a perspective view, respectively, of an alternative differential housing 2214. Oil channels 2221 along the differential housing 2214 negate the need for oil channels 321 on input gear 200.

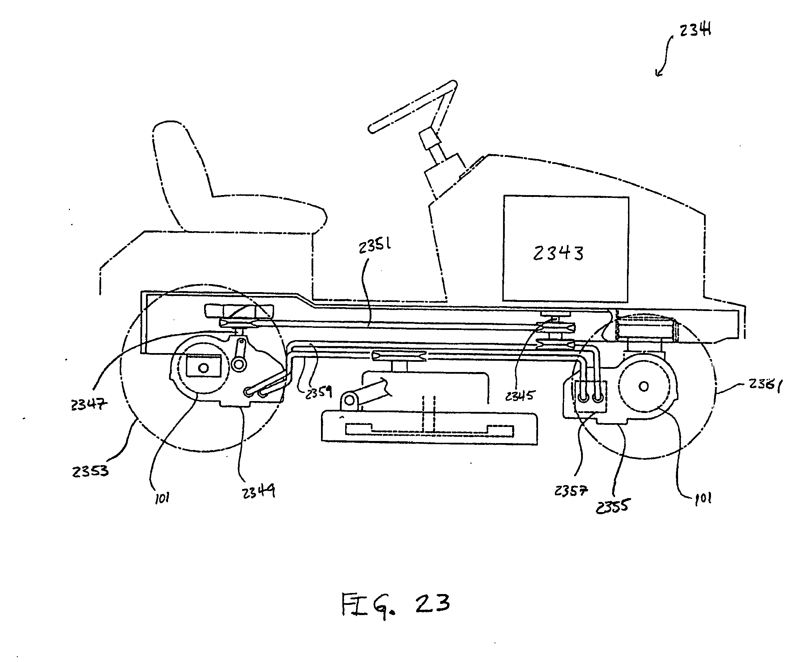

FIG. 23 is a four-wheel-drive working vehicle 2341 mounting a differential unit 101 as presented herein. Working vehicle 2341 includes an engine 2343 having a vertical output shaft 2345. Engine 2343 delivers drive power to a vertical input shaft 2347 of a rear transaxle 2349 (such as IHT 100 described above) through a pulley-belt combination 2351. As would be evident to one of skill in the art, alternative drive trains, such as mechanical shafts, may be employed as alternatives to pulley-belt combination 2351. Rear transaxle 2349 is a drive system combining an IHT with any of the differential unit 101 embodiments discussed above. Rear transaxle 2349 serves to drive rear wheels 2353.

Working vehicle 2341 further includes a front transaxle 2355. Front transaxle 2355 is a drive system combining a hydraulic motor 2357 with any of the differential unit 101 embodiments described above. Front transaxle 2355 serves to drive front wheels 2361. Hydraulic motor 2357 of front transaxle 2355 is fluidly connected to and driven by the IHT of rear transaxle 2349 through hydraulic fluid lines 2359. As such, hydraulic fluid lines 2359 serve as a drive train between rear transaxle 2349 and front transaxle 2355. A similar drive system is described in U.S. Patent No. 6,845,837, which is hereby incorporated in its entirety by reference thereto. Alternative drive trains between front and rear transaxles, such as the mechanical shaft drive train described in U.S. Patent No. 6,902,017, and the hydraulic drive train described in U.S. Patent No. 4,886,142, may also be used. The disclosures of U.S. Patent Nos. 4,886,142 and 6,902,017 are hereby incorporated by reference in their entirety. Further, while the vehicle shown is of an Ackermann steering type, the differential units described may be employed in other vehicles such as a vehicle of articulate steering type.

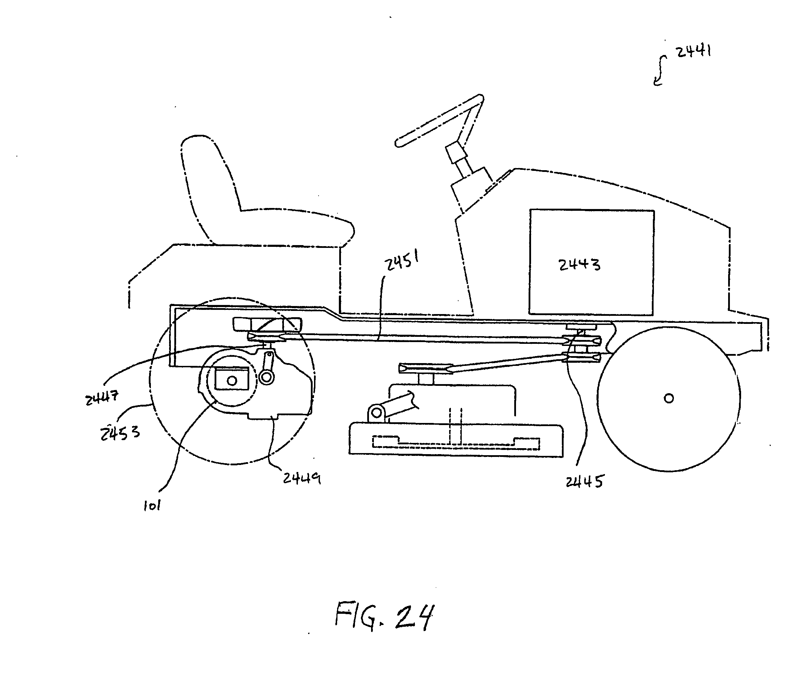

FIG. 24 is a two-wheel-drive working vehicle 2441 employing a differential unit 101 as presented herein. Working vehicle 2441 includes an engine 2443 having a vertical output shaft 2445. Engine 2443 delivers drive power to a vertical input shaft 2447 of a rear transaxle 2449 (such as IHT 100 described above) through a pulley-belt combination 2451. As would be evident to one of skill in the art, alternative drive trains, such as mechanical shafts, may be employed as alternatives to pulley-belt combination 2451. Rear transaxle 2449 is a drive system combining an IHT with any of the differential unit 101 embodiments discussed above. Rear transaxle 2449 serves to drive rear wheels 2453.

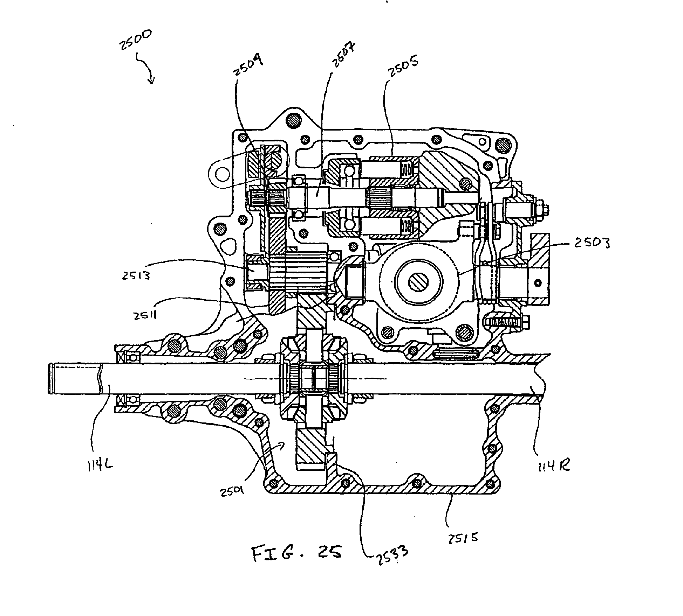

FIG. 25 is a cross-sectional view of an IHT 2500 employing an alternative differential unit 2501. Similar to FIG. 1, FIG. 25 depicts an IHT 2500 employing a hydraulic pump 2503 (shown in phantom) and a hydraulic motor 2505 fluidly connected to the hydraulic pump 2503. Hydraulic motor 2505 includes an output shaft, or motor shaft 2507. Splined gear 2509 is mounted on motor shaft 2507, to thereby rotate with motor shaft 2507. Splined gear 2509 meshes with gear 2511 mounted on countershaft 2513. Rotation of countershaft 2513 thereby transmits rotational drive to differential unit 2501. Differential unit 2501 thereafter differentially drives axle shafts 114L and 114R. The components of IHT 2500 are all appropriately mounted and maintained within IHT housing 2515. Specifically, housing 2515 includes a lip 2533 to support differential unit 2501.

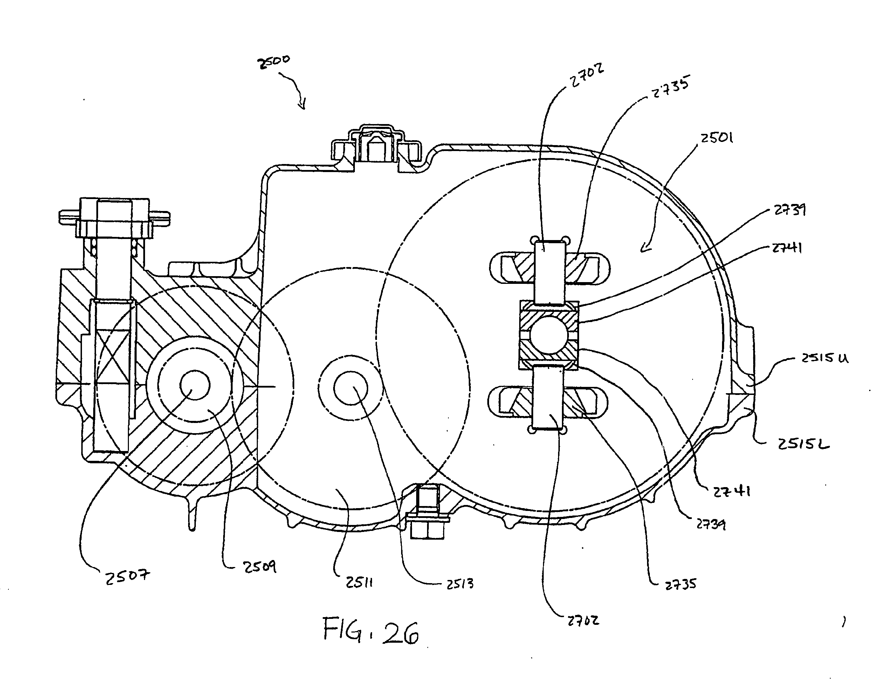

FIG. 26 is a cross-sectional view of IHT 2500 of FIG. 25. FIG. 26 provides an alternative view as to how gears 2509 and 2511 mesh to ultimately rotate the differential unit 2501. As shown in FIG. 26, housing 2515 is split between an upper housing 2515U and a lower housing 2515L. Upper and lower housings are then fastened together by appropriate means, such as a bolt.

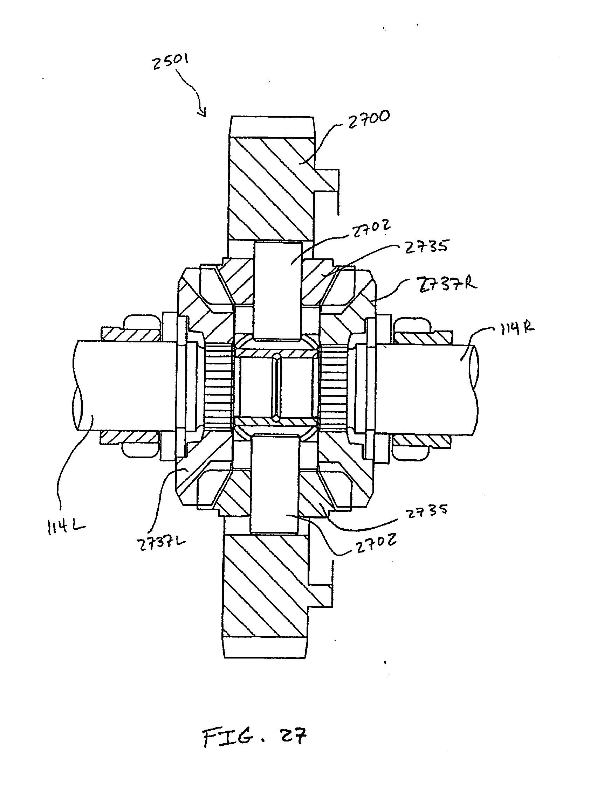

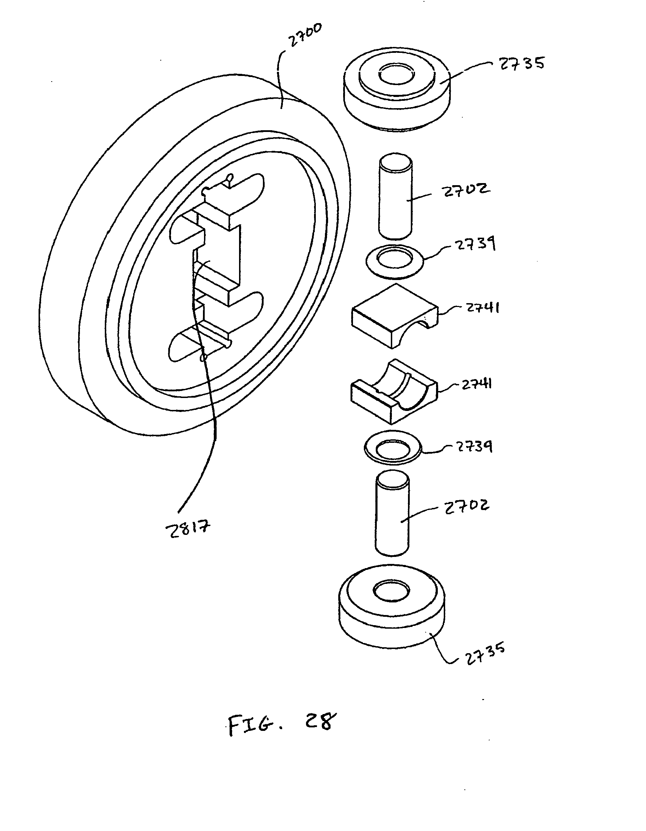

FIG. 27 is a cross-sectional view of the differential unit 2501 of FIG. 25. Differential unit 2501 includes an input gear 2700 having a central opening 2817 (as shown in FIG. 28). Two cross-shafts 2702 are disposed within the central opening of the input gear 2700 and are interlocked with the input gear such that rotation of the input gear rotates the cross-shafts. Mounted on each cross-shaft 2702 is a pinion gear 2735. Pinion gears 2735 mesh with left and right output gears 2737L, 2737R, which in turn are in splined engagement with left and right axle shafts 114L, 114R.

Differential unit 2501 also includes a pair of coned disk springs 2739 and a pair of friction members 2741. Friction members 2741 surround the end portions of axle shafts 114L, 114R. Coned disk springs 2739 serve to press friction members 2741 against the end portions of axle shafts 114L, 114R. As such, under normal operating conditions, rotation of input gear 2700 causes rotation of both axle shafts 114L, 114R. During turning conditions, differential unit 2501 acts as a standard differential unit. However, during free-wheel conditions, the friction members 2741 serve to lock axle shafts 114L, 114R so that both axle shafts rotate together. Thus friction members 2741 serve as a differential locking means for differential unit 2501. FIG. 28 is an exploded view of the differential unit 2501 of FIG. 25 showing how the pinion gears 2735, cross-shafts 2702, coned disk springs 2739 and friction members 2741 are aligned within the central opening 2817 of the input gear 2700.

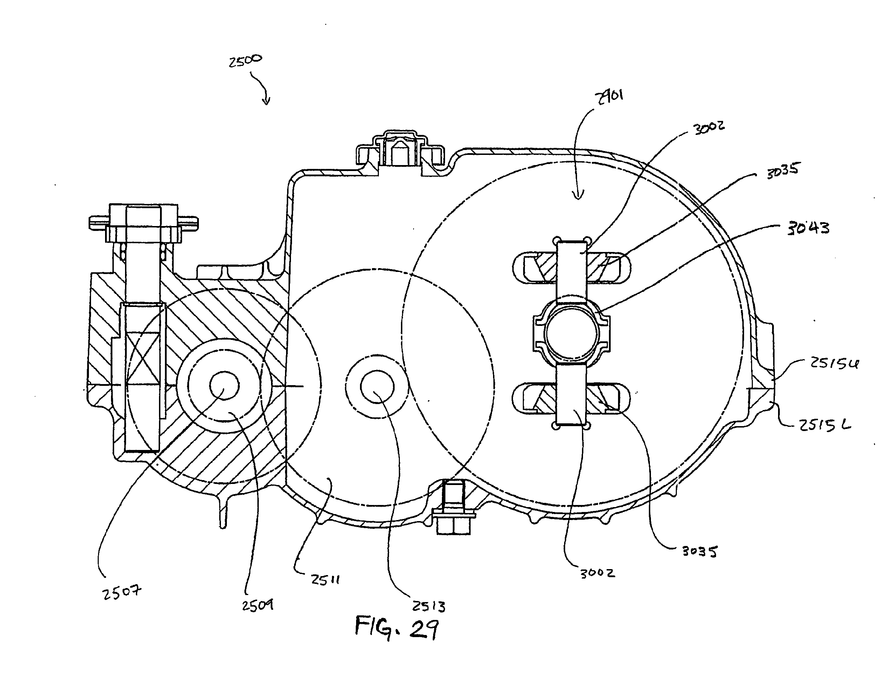

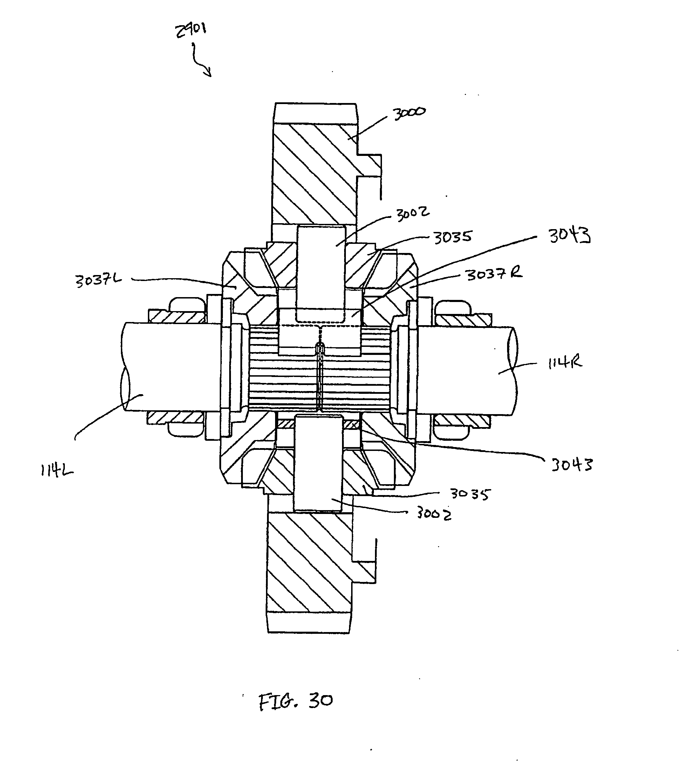

FIG. 29 is a cross-sectional view of IHT 2500 (of FIG. 25) incorporating an alternative differential unit 2901. FIG. 30 is a cross-sectional view of the differential unit 2901 of FIG. 29. Differential unit 2501 includes an input gear 3000 having a central opening 3117 (as shown in FIG. 28). Two cross-shafts 3002 are disposed within the central opening of the input gear 3000 and are interlocked with the input gear such that rotation of the input gear rotates the cross-shafts. Mounted on each cross-shaft 3002 is a pinion gear 3035. Pinion gears 3035 mesh with left and right output gears 3037L, 3037R, which in turn are in splined engagement with left and right axle shafts 114L, 114R.

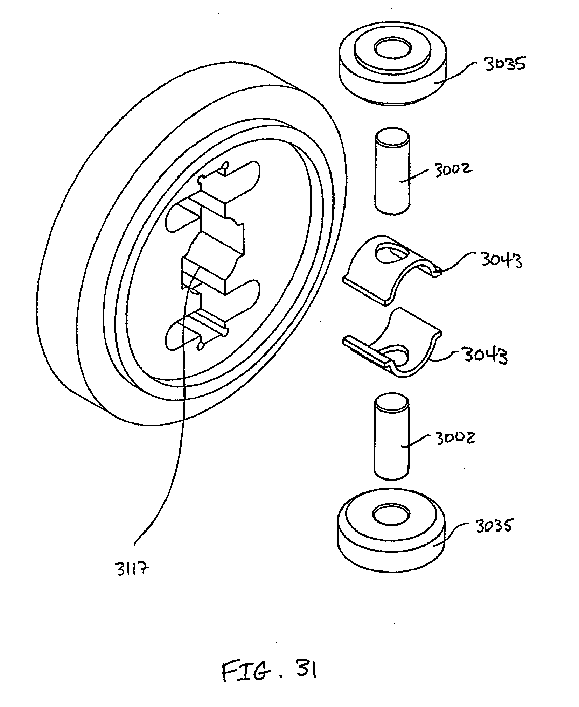

Differential unit 2901 also includes a pair of friction springs 3043. Friction springs 3043 surround the end portions of axle shafts 114L, 114R. As such, under normal operating conditions, rotation of input gear 3000 causes rotation of both axle shafts 114L, 114R. During turning conditions, differential unit 2901 acts as a standard differential unit. However, during free-wheel conditions, the friction springs 3043 serve to lock axle shafts 114L, 114R so that both axle shafts rotate together. Thus friction springs 3043 serve as a differential locking means for differential unit 2901. FIG. 31 is an exploded view of the differential unit 2901 of FIG. 29 to show how the pinion gears 3035, cross-shafts 3002, and friction springs 3043 are aligned within the central opening 3117 of the input gear 3000.

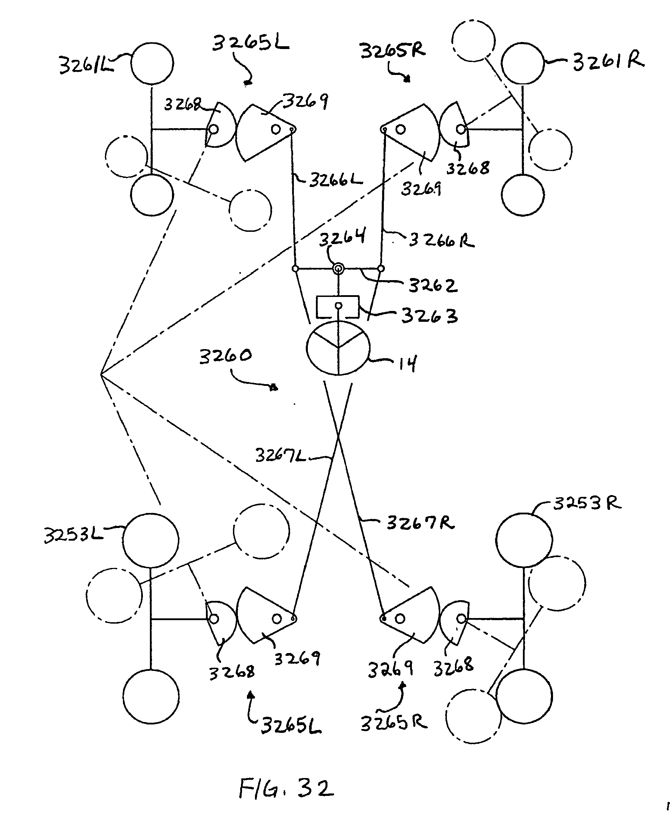

FIG. 32 a diagrammatic plan view of a four-wheel vehicle provided with four steerable wheels, in accordance with an embodiment of the present invention. The vehicle is provided with both front steerable wheels 3261L and 3261R and rear steerable wheels 3253L and 3253R operated by a steering wheel 14 via a steering linkage 3260 and steering gear units 3265. A vehicle provided with four steerable wheels has the advantage of decreased turf damage when turning, as compared with a vehicle with only two steerable wheels. FIG. 32 shows in phantom the positions of each of the wheels 3261L, 3261R, 3253L, and 3253R during left turning of the vehicle.

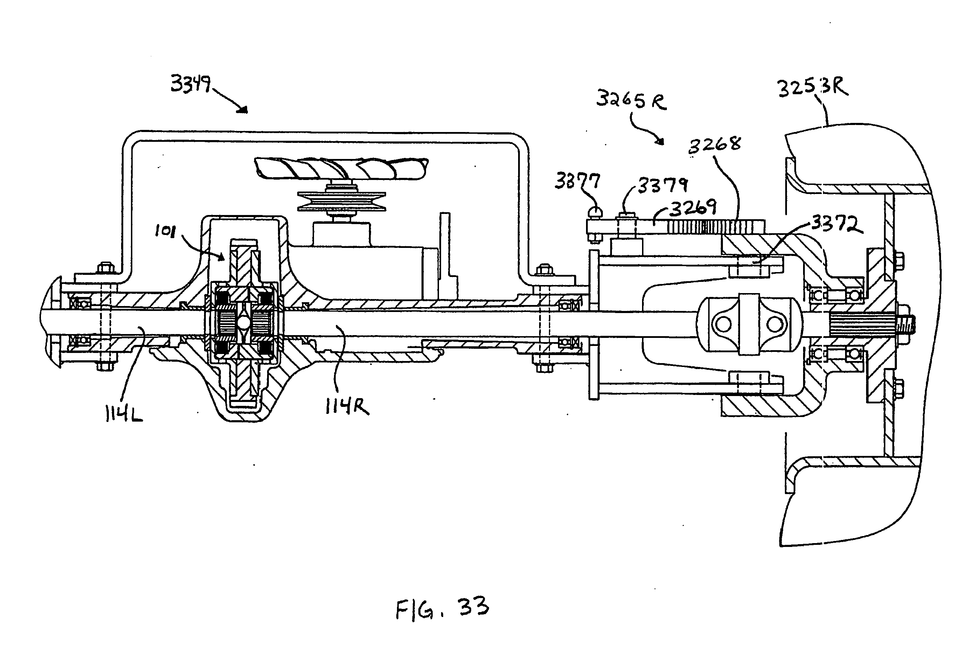

The vehicle employs front and rear left steering gear units 3265L, 3265L and front and rear right steering gear units 3265R, 3265R, such that each steerable wheel is provided with a steering gear unit. Each steering gear unit 3265 includes a noncircular drive gear 3269 and a non-circular driven gear 3268, each having toothed peripheries so that teeth of drive gear 3269 mesh with teeth of driven gear 3268. Steering linkage 3260 operatively connects steering wheel 14 with each of steering gear units 3265. Specifically, steering wheel 14 is connected to a center pivotal joint 3264 on an intermediate portion of a tie rod 3262 through a steering gear box 3263. Steering linkage 3260 includes left and right rear rods 3267L and 3267R, each of which are pivotally connected at one of their ends to tie rod 3262 and at the other of their ends to respective pivotal joints 3377 (see FIG. 33) of respective drive gears 3269 of left and right rear steering gear units 3265L and 3265R. Steering linkage 3260 further includes left and right front rods 3266L and 3266R, each of which are pivotally connected at one of their ends to tie rod 3262 and at the other of their ends to respective drive gears 3269 of left and right front steering gear units 3265L and 3265R.

When steering wheel 14 is rotated from its neutral position, or its straight traveling setting position, tie rod 3262 is tilted so that one of rods 3266L and 3266R is pushed forward so as to rotate backward the toothed periphery of its corresponding drive gear 3269, and the other of rods 3266R and 3266L is pulled backward so as to rotate forward its corresponding drive gear 3269. Moreover, a push forward of rod 3266L, for example, corresponds with a pull forward of rod 3267R, whereby drive gear 3269 corresponding to rod 3267R is rotated backward. A similar linkage exists between rods 3266R and 3267L, whereby push forward (or pull backward) of rod 3266R corresponds with a pull forward (or push backward) of rod 3267L.

Steering gear units 3265L and 3265R are constructed laterally symmetrical to each other, and the front steering gear units are identical to the rear steering gears units. Therefore, detailed description will now be provided for one of the steering gear units 3265 with reference to FIG. 33. FIG. 33 is a cross-sectional view of a right portion of a rear transaxle 3349 of the vehicle shown in FIG. 32, showing right rear steering gear unit 3265R with non-circular drive gear 3269 and driven gear 3268. The left steering gear unit 3265L, though not shown in FIG. 33, is a mirror image of right steering gear unit 3265R.

Rear transaxle 3249 includes left and right axles 114L and 114R with differential unit 101 interposed there between. It should be understood that other embodiments of a differential unit described herein (e.g., differential unit 2501) may likewise be employed in rear transaxle 3249 without departing from the spirit and scope of the present invention. Moreover, the vehicle of FIG. 32 having rear transaxle 3349 may be a four-wheel-drive vehicle (see, e.g., vehicle 2341 of FIG. 23) or a two-wheel-drive vehicle (see, e.g., vehicle 2441 of FIG. 24). In an embodiment of the vehicle in which front wheels 3261L and 3261R are also drive wheels, then the vehicle may be provided with a front transaxle including differential gear unit 101 along with front steering gear units 3265, in a similar manner of construction as that of rear transaxle 3349.

As shown in FIG. 33, drive gear 3269 is pivoted about a pivot pin 3379 in response to a push or pull of linkage rod 3267R joined to drive gear 3269 by pivotal joint 3377. The distal toothed periphery of drive gear 3269 meshes with proximal toothed periphery of driven gear 3268, whereby pivoting of drive gear 3269 causes pivoting of driven gear 3268 during turning of the vehicle. Driven gear 3268 is provided on a kingpin 3372, which serves as a pivot of driven gear 3268 and rotates integrally therewith. Kingpin 3372 in turn pivots rear steerable wheel 3253R.

Non-circular gears 3268 and 3269 of a steering gear unit 3265 may be configured so as to compensate for a difference between the lateral turning center of inside and outside of steerable wheels and the lateral turning center of the vehicle caused by differential drive of wheels. Further description of non-circular gears for steering that may be employed in a transaxle in accordance with the present invention is provided in U.S. Patent Application Publication No. 2006/0191725 and International Publication No. WO 2007/014030, both disclosures of which are hereby incorporated herein in their entirety by reference thereto. For example, drive gear 3269 and driven gear 3269 may be modified similar to gears 58 and 59 of FIG. 49 of U.S. Patent Application Publication No. 2006/0191725 so as to compensate for a difference between the lateral turning centers of front steerable wheels of a vehicle relative to the lateral turning center caused by a differential drive of rear wheels.

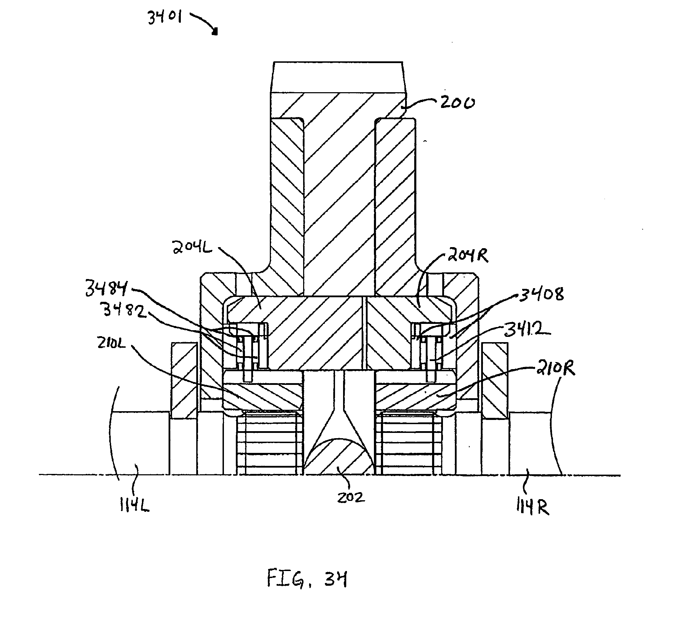

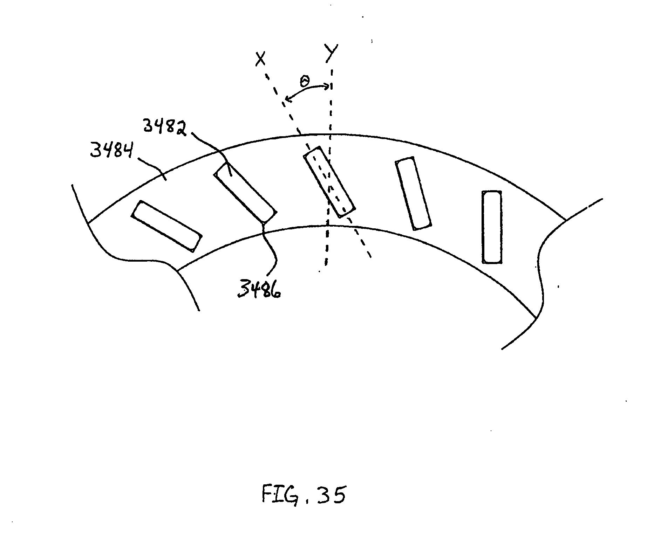

FIG. 34 is a cross-sectional view of a portion of an alternative differential unit 3401. Differential unit 3401 is similar to differential unit 101 described above with reference to FIG. 2, but in place of first and second plurality of fiction members 208, 212, differential unit 3401 employs multiple annular cages 3484, each holding a plurality of rollers 3482 at certain intervals in the circumferential direction. FIG. 35 is an enlarged view of a portion of cage 3484 and rollers 3482. Each roller 3482 is of a cylindrical form extending uniformly in the axial direction. The cage 3484 has a multiplicity of holes 3486 for receiving the rollers 3482 in such a manner as to allow their free rolling, and the holes are provided in such a manner that rolling axes X of the rollers 3482 are inclined by an angle theta θ relative to a plane including the rotational axis of the cage body, in other words, a line Y extending from the rotational center of the cage body.

Pressure plates 3408 extend from each of clutch members 204L, 204R, and a pressure plate 3412 extends from each of side couplings 210L, 210R. Each cage 3484 with corresponding rollers 3482 is arranged between one of pressure plates 3408 and pressure plate 3412. Accordingly, in this embodiment, two cages 3484 with corresponding rollers 3482 are provided for each of clutch member 204L (and side coupling 210L) and clutch member 204R (and side coupling 210R). Rollers 3482 of each cage 3484 roll while being in pressure contact with pressure plates 3408 and 3412, which is followed by the rotation of cage 3484. There occurs a frictional force among the rollers 3482 and pressure plates 3408 and 3412, which results in a resistance to restrict the differential motion, and the rollers generate a sliding friction in the course of rolling, thereby always ensuring a stable frictional force based on a dynamic friction even at a low rotational speed. Consequently, rollers 3482 reduce or cancel vibration and noise that may be caused by "stick slip," that is, intermittent generation of static friction and dynamic friction on a clutch-to-clutch basis that may occur, in particular, at the lower rotational speed. Further description of such cage and rollers fictional member for a differential unit is provided in U.S. Patent 5,897,453, which is incorporated herein in its entirety by reference thereto.

### Conclusion

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

While various embodiments of an axle driving apparatus have been described, it should be understood that they have been presented by way of example, and not limitation. It will be apparent to a person skilled in the relevant art that various changes in form and detail can be made therein without departing from the spirit and scope of the appended claims. Thus the present invention should not be limited by any of the above-described exemplary embodiments, but should be defined only in accordance with the following claims and their equivalents.

## Claims

1. A working vehicle, comprising:
a pair of axles;
a differential unit for differentially driving the pair of axles; and
a pair of steerable wheels, one wheel disposed on each one of said axles,
wherein the differential unit is constructed so that, when the vehicle is turning, substantially no driving force is transmitted to the steerable wheel which is opposite to the turning center.

2. The working vehicle of claim 1, further comprising:
a pair of left and right steering gear units one for turning one of each of said pair of steerable wheels, wherein each steering gear unit includes a non-circular drive gear meshing with a non-circular driven gear; and
a steering operation device operatively connected to said pair of steering gear units.

3. The working vehicle of claim 1, further comprising a hydrostatic transaxle including:
a housing, wherein the differential unit and the pair of axles are disposed within the housing;
a hydraulic pump disposed within the housing and drivingly connected to a prime mover; and
a hydraulic motor disposed within the housing, the hydraulic motor being fluidly connected to the hydraulic pump, and wherein the hydraulic motor includes an output shaft,
wherein the differential unit is drivingly connected to the output shaft of the hydraulic motor, wherein the differential unit includes:
an input gear having a central opening;
a cross-shaft interlocked with the input gear such that rotation of the input gear rotates the cross-shaft; and
a pair of clutch members disposed coaxially with the input gear, one of each clutch members disposed on opposite sides of the cross-shaft, each clutch member including a cam surface which comes in contact with the cross-shaft when the differential unit is under normal operating conditions.

4. A working vehicle, comprising:
a first pair of steerable wheels;
a second pair of steerable wheels;
a differential unit for differentially driving a pair of axles onto which at least one of said first pair and said second pair of steerable wheels are attached, wherein the differential unit is constructed so that, when the vehicle is turning, substantially no driving force is transmitted to the steerable wheel which is opposite to the turning center.

5. The working vehicle of claim 4, further comprising:
a pair of steering gear units for turning one of said first and said second pair of steerable wheels, differentially driven by the differential unit, wherein each steering gear unit includes a non-circular drive gear meshing with a non-circular driven gear; and
a steering operation device operatively connected to said pair of steering gear units.

6. The working vehicle of claim 4, further comprising:
a first pair of left and right steering gear units for turning said first pair of steerable wheels, and
a second pair of left and right steering gear units for turning said second pair of steerable wheels, wherein each steering gear unit of said first and second pair includes a non-circular drive gear meshing with a non-circular driven gear;
a steering operation device; and
a steering linkage operatively connecting said steering operation device to said pair of steering gear units, wherein said steering linkage includes
a first linkage operatively connecting said steering operation device to one of said steering gear units of said first pair and to one of said steering gear units of said second pair, and
a second linkage operatively connecting said steering operation device to the other of said steering gear unit of said first pair and to the other of said steering gear unit of said second pair.

7. The working vehicle of claim 4, further comprising a hydrostatic transaxle including:
a housing;
a hydraulic pump disposed within the housing and drivingly connected to a prime mover;
a hydraulic motor disposed within the housing, the hydraulic motor being fluidly connected to the hydraulic pump, and wherein the hydraulic motor includes an output shaft,
wherein the pair of axles driven by the differential unit are disposed within the housing, and
wherein the differential unit is disposed within the housing and is drivingly connected to the output shaft of the hydraulic motor, wherein the differential unit includes:
an input gear having a central opening;
a cross-shaft interlocked with the input gear such that rotation of the input gear rotates the cross-shaft; and
a pair of clutch members disposed coaxially with the input gear, one of each clutch members disposed on opposite sides of the cross-shaft, each clutch member including a cam surface which comes in contact with the cross-shaft when the differential unit is under normal operating conditions.

8. A hydrostatic transaxle for driving a working vehicle, comprising:
a housing;
a pair of axles are disposed within the housing, each outer end of the axle installs a steerable wheel;
a differential unit is disposed within the housing for differentially driving the pair of axles, wherein the differential unit is constructed so that, when the vehicle is turning, substantially no driving force is transmitted to the steerable wheel which is opposite to the turning center;
a hydraulic pump disposed within the housing and drivingly connected to a prime mover; and
a hydraulic motor disposed within the housing, the hydraulic motor being fluidly connected to the hydraulic pump, and wherein the hydraulic motor includes an output shaft,
wherein the differential unit is drivingly connected to the output shaft of the hydraulic motor, wherein the differential unit includes:
an input gear;
a cross-shaft interlocked with the input gear such that rotation of the input gear rotates the cross-shaft; and
a pair of clutch members disposed coaxially with the input gear, one of each clutch members disposed on opposite sides of the cross-shaft, each clutch member including a cam surface which comes in contact with the cross-shaft when the differential unit is under normal operating conditions.
